# EUROPEAN PATENT SPECIFICATION

(11) **EP 2 143 601 B1**
(45) Date of publication and mention of the grant of the patent: **23.01.2013**
(21) Application number: 08159837.7
(22) Date of filing: 07.07.2008
(51) Int. Cl.: B60S 1/04

(54) **Wiper assembly**
Wischeranordnung
Ensemble d'essuie-glace

(43) Date of publication of application: 13.01.2010
(73) Proprietor: Volvo Car Corporation, 405 31 Göteborg (SE)
(72) Inventor: Dominique, Christer, 423 53, Torslanda (SE); Jansson, Claes, 423 54, Torslanda (SE)
(74) Representative: Bergquist, Kjell Gunnar

(56) References cited:
- WO-A-03/047926
- DE-A1- 10 255 774
- DE-A1- 10 255 775
- DE-A1-102005 039 763
- FR-A- 2 859 961
- US-A1- 2004 123 412

## Description

### TECHNICAL FIELD

The present invention relates generally to a pedestrian safety device, and more particularly, to a wiper assembly which is designed to dampen an impact force for an extraneous object during a collision.

The present invention relates to a wiper assembly according to claim 1 and further to a vehicle comprising a wiper assembly according to claim 7.

### BACKGROUND ART

Vehicles are equipped with windscreen wipers to wipe rain, snow, dirt etc. off from the windshield. The windscreen wipers are generally arranged on a wiper assembly which is fixedly mounted onto the vehicle chassis. The wiper assembly is in most cases arranged below the bonnet, with exception to the windshield wipers which protrude upwards in a space between the windshield and a rear edge of the bonnet. The windshield wipers are mounted on wiper shafts which have a fixed length in their longitudinal direction and protrude upwards from the wiper assembly. During a collision with for example a pedestrian, the pedestrian will in a worst case scenario end up on top of the bonnet which will give way and be deformed to dampen the fall. Even if the bonnet gives way during a collision the protruding parts such as the wiper shafts which are fixedly mounted below the bonnet will still protrude upwards. When the bonnet gives way and deforms, the protruding parts will still constitute hard impact objects which the pedestrian may contact during collision and which objects may injure the pedestrian when landing on the bonnet.

Thus it is an object to minimize the magnitude of impact forces caused by protruding objects, to which the pedestrian can be exposed. There are prior art arrangements which have tried to address this problem. For example, WO 2007/020175 shows a known windshield wiper device which comprises a collapsible wiper arm spindle, which spindle can be displaced axially when subjected to an impact. The spindle is fitted with a radial spring loaded device holding the spindle in position. When the spindle is subjected to an axial force exceeding the radial spring force, the spindle is displaced. However, a great impact force is required to displace the spindle. When the spindle gives way for the impact force it will happen suddenly and the spindle will immediately touch the bottom of the windshield wiper device and thus not dampen the blow from the impact force. Another disadvantage with this windshield wiper device is that when it once has been subjected to an impact, the device will have to be exchanged since it will not be able to remain functional.

Document DE-A-10255775 discloses a wiper assembly according to the preamble of claim 1.

One object of the present invention is to provide an improved wiper assembly that addresses the above problems with wiper assemblies, and it is also an object of the present invention to provide a wiper assembly which is impact absorbing and can remain functional after an impact.

### SUMMARY OF THE INVENTION

The above problems have been solved by a wiper assembly according to the appended claims.

According to a preferred embodiment, the invention relates to a wiper assembly for a vehicle, which wiper assembly comprises an arm structure which is mounted to said vehicle with attachment means and which arm structure is provided with protruding wiper shafts. Said wiper shafts are rotatable and mounted on said arm structure, and an electric motor is arranged to generate and transfer rotational movement to said wiper shafts via a linkage.

According to an example at least one of the attachment means is provided with impact absorbing means, which is arranged to dampen an impact force acting on at least one wiper shaft during a collision with an object.

According to an example said impact absorbing means is arranged to give way from a first position to a second position when said wiper shaft and said arm structure are subjected to an impact force and to return said wiper shaft and said arm structure to said first position after being subjected to an impact.

According to an example said impact absorbing means is arranged on a guide pin, which has a first end fixedly attached to said vehicle and a free second end, and that at least one end of said arm structure is movable guided on the guide pin.

According to an example said guide pin is provided with a stop at said second end, which stop constitutes a terminal point for a deflection movement between said second and first positions of said wiper shaft and said arm structure when provided in said first position.

According to an example said impact absorbing means is a resilient means. According to another example said resilient means is a coil spring.

According to another example attachment means with impact absorbing means can be provided in both ends of the arm structure below the wiper shafts.

### BRIEF DESCRIPTION OF THE DRAWINGS

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein.
- Figure 1: shows an isometric view of a wiper assembly in a first position when it is not deflected according to one embodiment of the invention;
- Figure 2: shows an isometric view of a wiper assembly in a second position when it is deflected;
- Figure 3: shows an isometric view, mirror-inverted in relation to Figure 1, of the impact absorbing means in a first position when it is not deflected; and
- Figure 4: shows an isometric view, mirror-inverted in relation to Figure 2, of the impact absorbing means in a second position when it is deflected.

### DETAILED DESCRIPTION

In the description directions, such as upwards, downwards etc., will be given, which are to be interpreted in relation to the longitudinal axis of a vehicle in a forward driving condition.

In a preferred embodiment the major part of the wiper assembly according to the invention is mounted below a bonnet of the vehicle, except for windshield wipers which protrude upwards towards a windshield in a free space between the windshield and the bonnet.

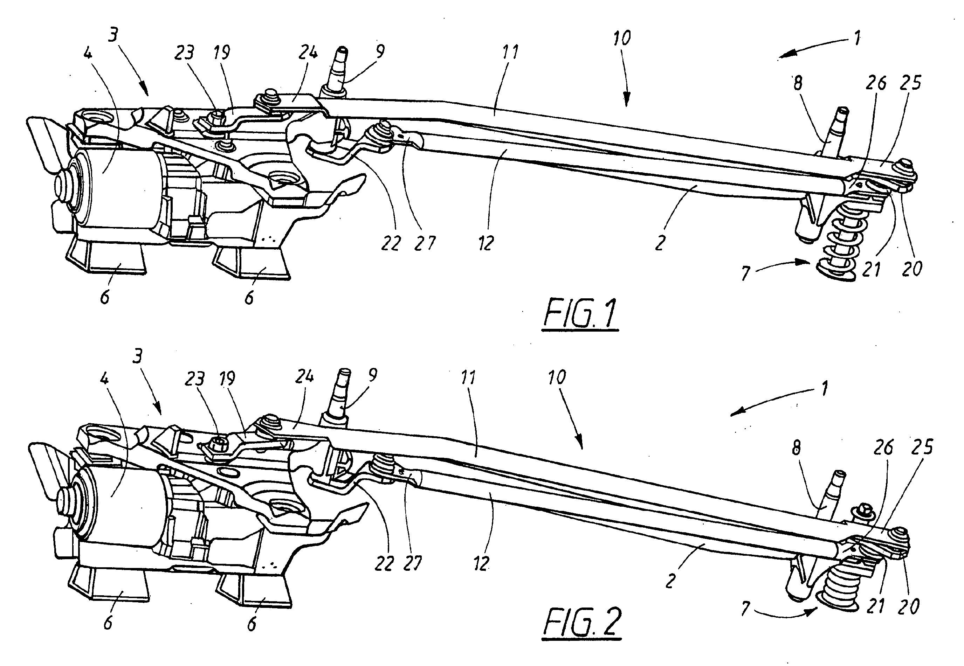

Figure 1 shows an isometric view of a wiper assembly 1 in a first position when it is not deflected and Figure 2 shows the wiper assembly in a second position when it is deflected. The first position is a normal operating position for the wiper assembly 1 and the second position is the position during an impact event for the wiper assembly 1. The wiper assembly 1 comprises an arm structure 2 which includes a housing 3, wherein an electric motor 4 is mounted. The housing 3 is preferably fixedly attached to the vehicle chassis 5 with rubber bushings 6, which rubber bushings 6 absorb vibrations and mitigate noise created from its mounting.

The arm structure 2 is mounted to the vehicle chassis 5 with attachment means 7 and which arm structure 2 is provided with upwards protruding wiper shafts 8, 9, which are rotatable and mounted on said arm structure 2. The electric motor 4 is arranged to generate and transfer rotational movement to the wiper shafts 8, 9, so that they can transfer a wiping movement to windscreen wipers attached on the wiper shafts 8, 9. The wiper shafts 8, 9 have fixed lengths in their longitudinal direction, which lengths are constant during operation of the windshield wipers.

The rotational movement from the motor 4 is transferred to the wiper shafts 8, 9 via a linkage 10. The linkage comprises at least two elongated arms 11, 12 which are connected to the wiper shafts 8, 9 via connectors 19, 20, 21, 22. A first connector 19 with a first end is connected to an output shaft 23 of the motor 4 and a second end of the first connector 19 is connected to a first end 24 of the first elongated arm 11. A second end 25 of the first elongated arm 11 is connected to a first end of a second connector 20, which in its second end is connected to the first wiper shaft 8.

The first wiper shaft 8 is connected to a first end of a third connector 21, which third connector 21 in a second end is connected to a first end 26 of a second elongated arm 12. A second end 27 of the second elongated arm 12 is connected to a first end of a fourth connector 22, which in its second end is connected to a second wiper shaft 9.

In operation, the motor 4 drives the first connector 19 which drives the motor 4 via the first elongated arm 11 and the second connector 20. Thus, the first connector 19, the first elongated arm 11 and the second connector 20 transfers the rotational movement from the motor 4 to the first wiper shaft 8.

Thus, the first wiper shaft 8, drives the third connector 21, which in turn drives and transfers the rotational movement from the first wiper shaft 8 to the second wiper shaft 9 via the second elongated arm 12 and the fourth connector 22. In operation, the first and second wiper shafts 8, 9 rotates synchronous with each other.

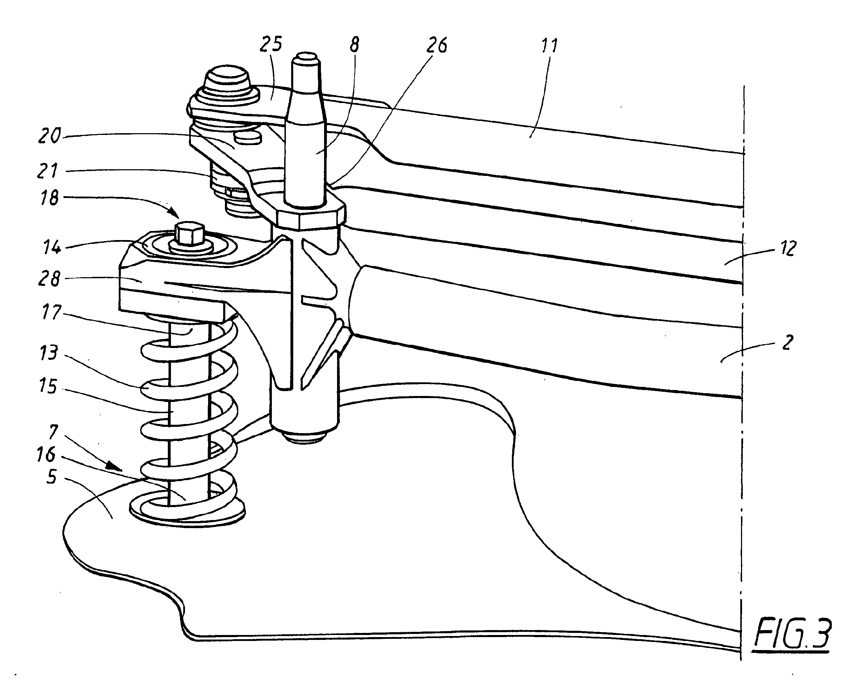

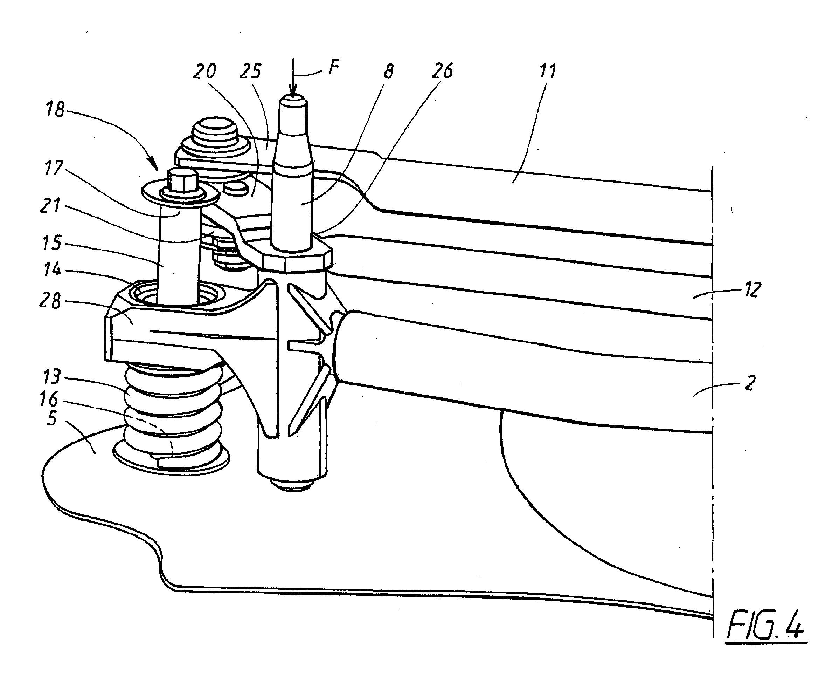

Figure 3 shows an isometric view of the impact absorbing means 13 in a first position when it is not deflected and Figure 4 shows the impact absorbing means 13 in a second position when it is deflected.

At least one of the attachment means 7 is provided with impact absorbing means 13, which is arranged to dampen an impact force F acting on at least one wiper shaft during a collision with an object. The impact absorbing means 13 is arranged to give way and to allow deflection of the arm structure 2 and its first wiper shaft 8, when subjected to an impact force F, as shown in Fig. 4. Thus, when subjected to an impact, the arm structure 2 gives way from a first position, shown in Figure 1 and 3, to a second position, shown in Figure 2 and 4. The impact absorbing means 13 is also arranged to return the arm structure 2 and its first wiper shaft 8 from the second position to the first position after the action of the impact force F so that the wiper assembly 1 can be reused.

The impact absorbing means 13 shown in Figure 3 and 4 is positioned below a first wiper shaft 8, as shown in Figure 1 and 2. The arm structure 2 is provided with the first wiper shaft 8, which is connected to the first and second elongated arms 11, 12 via the second and third connectors 20, 21. The arm structure 2 is provided with an opening 14 in a protruding part 28 arranged on the arm structure 2. The impact absorbing means 13 is arranged on a guide pin 15, which has a first end 16 fixedly attached to the vehicle chassis 5 and a free second end 17. At least one end of the arm structure 2 is movable guided on the guide pin 15.

The guide pin 15 is provided with a stop 18 at the second end 17 of the guide pin 15, which stop 18 is arranged to constitute a terminal point for a deflection movement when the arm structure 2 and its first wiper shaft 8 moves between the first and the second position or vice versa or when the arm structure 2 and its first wiper shaft 8 is stationary in its first position. In one embodiment the stop 18 is constituted by a washer and a nut.

The impact absorbing means 13 is a resilient means, which can be a coil spring as shown in Figure 3. The magnitude of the impact force F, that is needed to compress the coil spring and deflect the arm structure 2 between the first and second positions, can easily be adapted to a desired condition by providing a spring having a different size and/or spring constant.

The invention is not limited to the above examples, but may be varied freely within the scope of the appended claims.

## Claims

1. Wiper assembly for a vehicle, which wiper assembly comprises;
- an arm structure (2) which is mounted to said vehicle with attachment means (7) and which arm structure (2) is provided with protruding first and second wiper shafts (8, 9),
- said wiper shafts (8, 9) are rotatable and mounted on said arm structure (2),
- an electric motor (4) is arranged to generate and transfer rotational movement to said wiper shafts (8, 9) via a linkage (10) comprising at least two elongated arms (11, 12) which are connected to the wiper shafts (8, 9) via connectors (19, 20, 21, 22); a first connector (19) with a first end is connected to an output shaft (23) of the motor (4) and a second end of the first connector (19) is connected to a first end (24) of the first elongated arm (11); and a second end (25) of the first elongated arm (11) is connected to a first end of a second connector (20), which in its second end is connected to the first wiper shaft (8), **characterized in that**
- at least one of the attachment means (7) is provided with impact absorbing means (13), which is arranged to dampen an impact force F acting on at least one wiper shaft (8, 9) during a collision with an object,
wherein the arm structure (2) is arranged to move from a first position to a second position, and where the impact absorbing means (13) is arranged to return the arm structure (2) and its first wiper shaft (8) from the second position to the first position;
wherein at least one end of the arm structure (2) is provided with an opening (14) in a protruding part (28) for accommodating an attachment means (7) provided with impact absorbing means arranged to dampen an impact force acting on at least one wiper shaft (8, 9) during a collision with an object, and wherein said impact absorbing means is arranged on a guide pin (15), which has a first end fixedly attached to said vehicle and a free second end extending through said opening (14), and that at least one end of said arm structure (2) is movable guided on the guide pin (15) during a collision.

2. Wiper assembly according to claim 1, **characterized in that** said impact absorbing means (13) is arranged to give way from a first position to a second position when said wiper shaft (8, 9) and said arm structure (2) are subjected to an impact force F and to return said wiper shaft (8, 9) and said arm structure (2) to said first position after subjected to an impact.

3. Wiper assembly according to claim 1 or 2, **characterized in that** said impact absorbing means (13) is arranged on a guide pin (15), which has a first end (16) fixedly attached to said vehicle and a free second end (17), and that at least one end of said arm structure (2) is movable guided on the guide pin (15).

4. Wiper assembly according to claim 3, **characterized in that** said guide pin (15) is provided with a stop (18) at said second end (17), which stop (18) constitutes a terminal point for a deflection movement between said second and first positions of said wiper shaft (8, 9) and said arm structure (2) when provided in said first position.

5. Wiper assembly according to any of claims 1-3, **characterized in that** said impact absorbing means (13) is a resilient means.

6. Wiper assembly according to claim 5, **characterized in that** said resilient means is a coil spring.

7. A vehicle comprising a wiper assembly according to claims 1-6.

## Patentansprüche

1. Wischeranordnung für ein Fahrzeug, welche Wischeranordnung umfasst;
- eine Armstruktur (2), welche mit Befestigungsmitteln (7) am Fahrzeug montiert ist, und welche Armstruktur (2) mit vorstehenden ersten und zweiten Wischerwellen (8, 9) ausgestattet ist,
- die Wischerwellen (8, 9) drehbar und an der Armstruktur (2) montiert sind,
- ein elektrischer Motor (4) dazu ausgebildet ist, eine Drehbewegung zu erzeugen und diese auf die Wischerwellen (8, 9) durch eine Verbindung (10) zu übertragen, welche mindestens zwei durch Steckverbinder (19, 20, 21, 22) mit den Wischerwellen (8, 9) verbundene, längliche Arme (11, 12) umfasst; ein erster Steckverbinder (19) mit einem ersten Ende mit einer Antriebswelle (23) des Motors (4) verbunden ist, und ein zweites Ende des ersten Steckverbinders (19) mit einem ersten Ende (24) des ersten länglichen Arms (11) verbunden ist; und ein zweites Ende (24) des ersten länglichen Arms (11) mit einem ersten Ende eines zweiten Steckverbinders (20) verbunden ist, welcher an seinem zweiten Ende mit der ersten Wischerwelle (8) verbunden ist, **dadurch gekennzeichnet, dass**
- mindestens eines der Befestigungsmittel (7) mit einem stoßabsorbierenden Mittel (13) ausgestattet ist, welche zur Dämpfung einer auf mindestens eine Wischerwelle (8, 9) ausübenden Stoßkraft F bei einer Kollision mit einem Objekt ausgebildet ist,
wobei die Armstruktur (2) dazu ausgebildet ist, sich von einer ersten Position in eine zweite Position zu bewegen, und wobei das stoßabsorbierende Mittel (13) dazu ausgebildet ist, die Armstruktur (2) und ihre erste Wischerwelle (8) von der zweiten Position in die erste Position zurück zu bewegen;
wobei mindestens ein Ende der Armstruktur (2) mit einer Öffnung (14) in einem vorstehenden Teil (28) zur Aufnahme eines Befestigungsmittels (7) ausgestattet ist, welches mit einem stoßabsorbierenden Mittel ausgestattet ist, welches zur Dämpfung einer auf mindestens eine Wischerwelle (8, 9) ausübenden Stoßkraft bei einer Kollision mit einem Objekt ausgebildet ist, und wobei das stoßabsorbierende Mittel an einem Führungszapfen (15) angeordnet ist, welcher ein mit dem Fahrzeug fest verbundenes erstes Ende und ein freies, sich durch die Öffnung (14) hindurch erstreckendes zweites Ende aufweist, und dass bei einer Kollision mindestens ein Ende der Armstruktur (2) an dem Führungszapfen (15) beweglich geführt ist.

2. Wischeranordnung nach Anspruch 1, **dadurch gekennzeichnet, dass** das stoßabsorbierende Mittel (13) dazu ausgebildet ist, von einer ersten Position in eine zweite Position überzugehen, wenn die Wischerwelle (8, 9) und die Armstruktur (2) einer Stoßkraft F unterworfen werden, und sich auf die Wischerwelle (8, 9) und die Armstruktur (2) in die erste Position zurück zu bewegen, nachdem sie einem Stoß unterworfen worden sind.

3. Wischeranordnung nach Anspruch 1 oder 2, **dadurch gekennzeichnet, dass** das stoßabsorbierende Mittel (13) an einem Führungszapfen (15) angeordnet ist, welcher ein mit dem Fahrzeug fest verbundenes Ende (16) und ein freies zweites Ende (17) aufweist, und dass mindestens ein Ende der Armstruktur (2) an dem Führungszapfen (15) beweglich geführt ist.

4. Wischeranordnung nach Anspruch 3, **dadurch gekennzeichnet, dass** der Führungszapfen (15) mit einem Anschlag (18) an dem zweiten Ende (17) ausgestattet ist, welcher Anschlag (18) einen Endpunkt für eine Umlenkungsbewegung zwischen den zweiten und ersten Positionen der Wischerwelle (8, 9) und der Armstruktur (2) bei der Bereitstellung in der ersten Position bildet.

5. Wischeranordnung nach einem der Ansprüche 1 bis 3, **dadurch gekennzeichnet, dass** das stoßabsorbierende Mittel (13) ein elastisches Mittel ist.

6. Wischeranordnung nach Anspruch 5, **dadurch gekennzeichnet, dass** das elastische Mittel eine Spiralfeder ist.

7. Fahrzeug umfassend eine Wischeranordnung nach den Ansprüchen 1 bis 6.

## Revendications

1. Ensemble d'essuie-glace pour un véhicule, ledit ensemble d'essuie-glace comprenant:
- une structure de bras (2) qui est montée sur ledit véhicule avec des moyens de fixation (7), et ladite structure de bras (2) est pourvue d'un premier et deuxième arbre d'essuie-glace en saillie (8, 9),
- lesdits arbres d'essuie-glace (8, 9) sont rotatifs et montés sur ladite structure de bras (2),
- un moteur électrique (4) est agencé pour générer et transférer un mouvement de rotation auxdits arbres d'essuie-glace (8, 9) par l'intermédiaire d'une liaison (10) comprenant au moins deux bras allongés (11, 12) qui sont reliés aux arbres d'essuie-glace (8, 9) par l'intermédiaire des connecteurs (19, 20, 21, 22); un premier connecteur (19) avec une première extrémité est relié à un arbre de sortie (23) du moteur (4), et une deuxième extrémité du premier connecteur (19) est reliée à une première extrémité (24) du premier bras allongé (11); et une deuxième extrémité (25) du premier bras allongé (11) est reliée à une première extrémité d'un deuxième connecteur (20) qui, dans sa deuxième extrémité est reliée au premier arbre d'essuie-glace (8), **caractérisé en ce que**
- au moins l'un des moyens de fixation (7) est pourvu d'un moyen d'absorption d'impact (13) qui est agencé pour amortir une force d'impact F agissant sur au moins un arbre d'essuie-glace (8, 9) lors d'une collision avec un objet,
la structure de bras (2) étant agencée pour se déplacer à partir d'une première position à une deuxième position, et le moyen d'absorption d'impact (13) étant agencé pour ramener la structure de bras (2) et son premier arbre d'essuie-glace (8) depuis la deuxième position à la première position;
au moins l'une extrémité de la structure de bras (2) étant pourvue d'une ouverture (14) dans une partie faisant saillie (28) pour loger un moyen d'attachement (7) pourvu d'un moyen d'absorption d'impact agencé pour amortir une force d'impact agissant sur au moins un arbre d'essuie-glace (8, 9) lors d'une collision avec un objet, et
ledit moyen d'absorption d'impact étant arrangé sur une tige de guidage (15) qui présente une première extrémité (16) attachée de manière fixe sur ledit véhicule, et une deuxième extrémité libre s'étendant à travers ladite ouverture (14), et qu'au moins une extrémité de ladite structure de bras (2) est guidée de manière mobile sur la tige de guidage (15) lors d'une collision.

2. Ensemble d'essuie-glace selon la revendication 1, **caractérisé en ce que** ledit moyen d'absorption d'impact (13) est agencé pour laisser la place à partir d'une première position à une deuxième position lorsque ledit arbre d'essuie-glace (8, 9) et ladite structure de bras (2) sont soumis à une force d'impact F et pour ramener ledit arbre d'essuie-glace (8, 9) et ladite structure de bras (2) à ladite première position après avoir été soumis à un impact.

3. Ensemble d'essuie-glace selon la revendication 1 ou 2, **caractérisé en ce que** ledit moyen d'absorption d'impact (13) est disposé sur une tige de guidage (15) qui présente une première extrémité (16) attachée de manière fixe sur ledit véhicule et une deuxième extrémité libre (17), et **en ce qu'**au moins une extrémité de ladite structure de bras (2) est guidée de manière mobile sur la tige de guidage (15).

4. Ensemble d'essuie-glace selon la revendication 3, **caractérisé en ce que** ladite tige de guidage (15) est pourvue d'une butée (18) au niveau de ladite deuxième extrémité (17), ladite butée (18) constituant un point terminal d'un mouvement de déviation entre lesdites deuxième et première positions dudit arbre d'essuie-glace (8, 9) et ladite structure de bras (2) une fois pourvue dans ladite première position.

5. Ensemble d'essuie-glace selon l'une quelconque des revendications 1 à 3, **caractérisé en ce que** ledit moyen d'absorption d'impact (13) est un moyen élastique.

6. Ensemble d'essuie-glace selon la revendication 5, **caractérisé en ce que** ledit moyen élastique est un ressort hélicoïdal.

7. Véhicule comprenant un ensemble d'essuie-glace selon les revendications 1 à 6.
